# EUROPÄISCHE PATENTSCHRIFT

(11) **EP 3 119 664 B1**
(45) Veröffentlichungstag und Bekanntmachung des Hinweises auf die Patenterteilung: **20.12.2017**
(21) Anmeldenummer: 15705975.9
(22) Anmeldetag: 17.02.2015
(51) Int. Cl.: B62D 17/00, B62D 7/06, B60G 7/00, B60G 3/20

(54) **EINZELRADAUFHÄNGUNG EINES MITTELS EINES AKTUATORS LENKBAREN HINTERRADS EINES FAHRZEUGS**
INDIVIDUAL WHEEL SUSPENSION OF A VEHICLE REAR WHEEL WHICH CAN BE STEERED BY MEANS OF AN ACTUATOR
SUSPENSION DE ROUE INDIVIDUELLE D'UNE ROUE ARRIÈRE POUVANT ÊTRE DIRIGÉE AU MOYEN D'UN ACTIONNEUR D'UN VÉHICULE

(30) Priorität: 19.03.2014 DE 102014205145
(43) Veröffentlichungstag der Anmeldung: 25.01.2017
(73) Patentinhaber: Bayerische Motoren Werke Aktiengesellschaft, 80809 München (DE)
(72) Erfinder: PITZER, Franz, 85716 Unterschleissheim (DE)
(86) Internationale Anmeldenummer: PCT/EP2015/053341
(87) Internationale Veröffentlichungsnummer: WO 2015/139904

(56) Entgegenhaltungen:
- EP-A1- 2 298 581
- EP-A2- 1 518 779
- DE-A1- 3 139 792
- DE-A1-102009 004 122
- DE-A1-102009 025 586
- DE-A1-102011 007 283
- DE-A1-102011 077 750
- DE-A1-102011 077 751
- JP-A- H04 310 468
- JP-A- H10 218 008
- JP-A- 2007 261 555
- JP-A- 2008 239 045
- JP-A- 2009 113 796
- JP-A- 2009 132 377
- JP-A- 2012 111 463

## Beschreibung

Die Erfindung betrifft eine Einzelradaufhängung eines mittels eines Aktuators zumindest geringfügig lenkbaren Hinterrads eines zweispurigen Fahrzeugs, dessen das Rad tragende Schwenklager durch einen sich im wesentlichen in Fahrzeug-Längsrichtung erstreckenden Längslenker sowie zwei sich überwiegend in Fahrzeug-Querrichtung erstreckende und bei Betrachtung in Fahrzeug-Längsrichtung in verschiedenen Ebenen liegende Querlenker geführt ist, deren dem Schwenklager abgewandte Enden zumindest geringfügig gelenkig direkt oder indirekt mit dem Fahrzeug-Aufbau verbunden sind, wobei das Schwenklager über zwei in unterschiedlicher Höhe über der Fahrbahn liegende Lager oder Gelenke derart gelenkig mit dem Längslenker verbunden ist, dass diese Lager oder Gelenke eine überwiegend senkrecht verlaufende Lenkachse oder Spreizachse für das Rad beschreiben, und wobei jeder Querlenker über ein Gummilager oder ein zumindest einen geringen Drehfreiheitsgrad aufweisendes Gelenk am Längslenker befestigt ist, und weiterhin am Schwenklager ein Steller angreift, der mit einem Stellelement des genannten Aktuators zusammenwirkend eine rotatorische Bewegung des Aktuators in eine Verschwenkbewegung des Schwenklagers um die Lenk- oder Spreizachse umsetzt. Zum Stand der Technik wird neben der zur Bildung des Oberbegriffs herangezogenen DE 10 2011 007 283 A1 beispielsweise auf die DE 31 39 792 A1 verwiesen.

Grundsätzlich ist die bekannte Einzelradaufhängung mit den o.g. Merkmalen sowohl mit nicht gelenkten Hinterrädern, d.h. wenn an diesen kein von einer Neutralstellung abweichender Spurwinkel eingestellt ist, kinematisch vorteilhaft, als auch hinsichtlich der Lenkbarkeit der Räder, nämlich dass an diesen ein von der Neutralstellung abweichender Spurwinkel über eine günstig darstellbare Lenk- oder Spreizachse einstellbar ist, vorteilhaft.

Die an den Fzg.-Hinterrädern einstellbaren Lenkwinkel sollten fein dosierbar eingestellt werden können, da sie sich bekanntlich im einstelligen Winkelgrad-Bereich bewegen. Bevorzugt kommen hierfür elektromotorische Stellmotoren mit einem rotatorisch im Winkel-Minuten-Bereich verdrehbaren Rotor, der direkt das o.g. Stellelement des Aktuators sein kann, aber nicht sein muss, zum Einsatz, welcher bzw. welches über diese Rotationsbewegung bspw. eine Spurstange zum Verschwenken des das Fzg.-Rad tragenden Schwenklagers geeignet im wesentlichen translatorisch verlagert. Dabei ist es bereits bekannt, aus Bauraum-Gründen, d.h. weil ein einziger zentral angeordneter Aktuator mit zwei zu den beiden Hinterrädern führenden Spurstangen im "Package" des Fahrzeugs nur schwer untergebracht werden kann, für jedes Hinterrad eines zweispurigen Fahrzeugs einen eigenen Lenk-Aktuator vorzusehen. Eine soeben genannte Spurstange ist dabei auch nur ein Beispiel für einen im Oberbegriff des Patentanspruchs 1 genannten Steller, welcher mit einem Stellelement des Aktuators verbunden ist, der seinerseits zum Verlagern des Stellers eine rotatorische Bewegung ausführt.

Hiermit soll nun aufgezeigt werden, wie ein Lenk-Aktuator an einer Einzelradaufhängung nach dem Oberbegriff des Anspruchs 1 hinsichtlich des Bauraumbedarfs günstig angeordnet werden kann (= Aufgabe der vorliegenden Erfindung).
Die Lösung dieser Aufgabe ist dadurch gekennzeichnet, dass die Rotationsachse für die rotatorische Bewegung des radindividuellen Aktuators zumindest annähernd in Richtung der Fahrzeug-Hochachse verläuft und das Stellelement des Aktuators um diese Rotationsachse verdrehbar ist, und dass der Aktuator zumindest teilweise im Innenraum einer Tragfeder, die als Schraubenfeder ausgebildet sein kann und über welche der Fahrzeug-Aufbau anteilig am Rad abgestützt ist, angeordnet ist.

Während im Stand der Technik an Fzg.-Hinterachsen vorgesehene Lenk-Aktuatoren in Form von Elektromotoren durchweg mit in Richtung der Fahrzeug-Querachse ausgerichteter Rotationsachse des Elektromotor-Rotors im Fahrzeug verbaut sind, wird vorliegend eine hierzu senkrecht stehende Orientierung für den Aktuator bzw. Elektromotor, genauer für dessen Rotationsachse, vorgeschlagen, was Bauraum-Vorteile verschafft. Dies gilt insbesondere für einen Aktuator, dessen Rotationsachse sich im wesentlichen in Richtung der Fahrzeug-Hochachse erstreckt, wenn das Stellelement des Aktuators um diese Rotationsachse verdrehbar ist.Das Aktuator-Stellelement kann dann über eine zwischengeschaltete und vorrangig translatorisch verlagerbare Spurstange (als "Steller" des Oberbegriffs des Anspruchs 1) auf das das Fzg.-Rad tragende Schwenklager einwirken. Alternativ kann der besagte Steller durch ein um die Lenk- oder Spreizachse des Schwenklagers drehbares Getriebe-Element eines Rotationsgetriebes (bspw. eines einfachen Stirnrad-Getriebes) ausgebildet sein, welches fest mit dem Schwenklager verbunden ist und über ein weiteres Getrieberad (als sog. Aktuator-Stellelement) vom eine rotatorische Bewegung ausführenden Aktuator angetrieben wird.

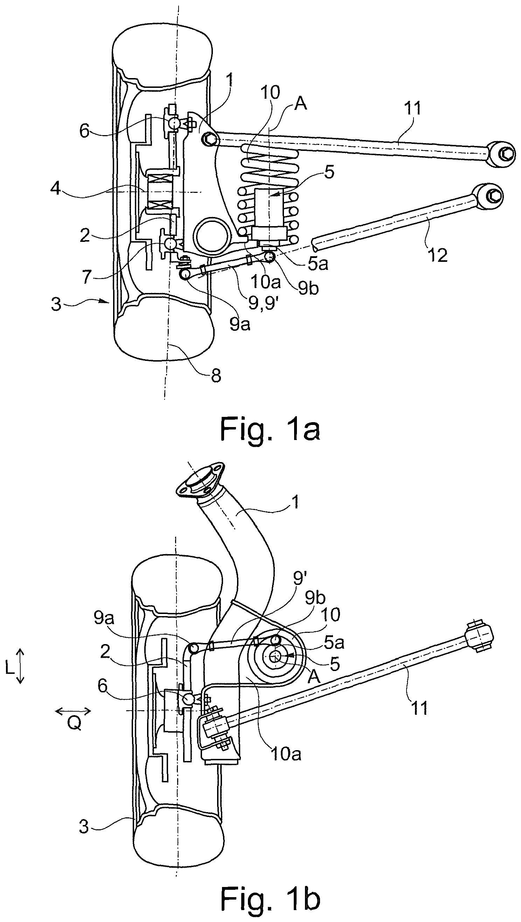

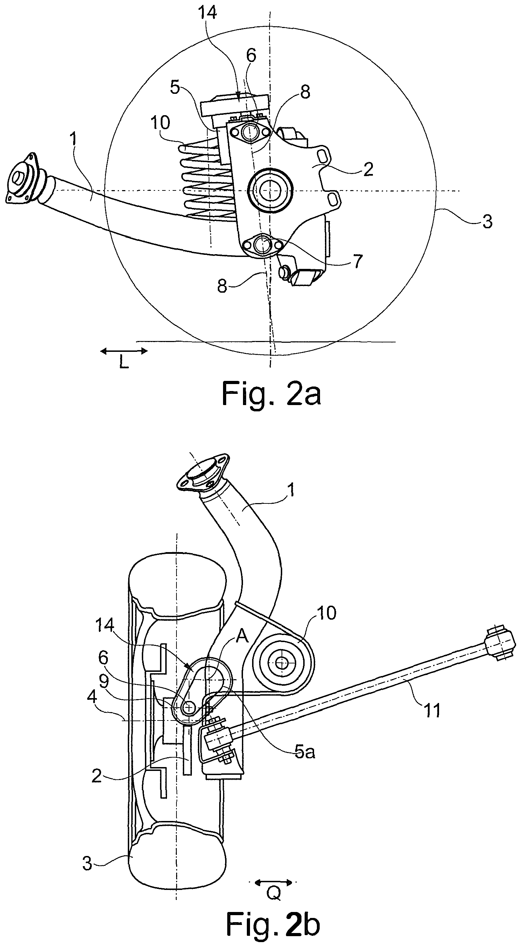

Im Weiteren werden mögliche Ausführungsbeispiele der vorliegenden Erfindung anhand der beigefügten Figuren beschrieben, wobei nur beim Ausführungsbeispiel nach Fig.1a, 1b sämtliche Merkmale des unabhängigen Patentanspruchs realisiert sind, nämlich als eine Ausführungsform mit einer sich in Richtung der Fzg.-Hochachse erstreckenden Aktuator-Rotationsachse und einem um diese verdrehbarem Stellelement, wobei **Figur 1a** eine Ansicht von hinten in Fahrtrichtung auf das linke Hinterrad eines Personenkraftwagens zeigt und in **Fig.1b** eine Aufsicht von oben auf dieses Hinterrad senkrecht auf die Fahrbahn gesehen dargestellt ist. Die Figuren 2a, 2b zeigen einen anderen Steller als die Figuren 1a, 1b, weshalb für die vorliegende Erfindung nur der Steller der Figuren 2a, 2b ein alternatives Beispiel darstellt, und zwar in Seitenansicht (Fig.2a) sowie in Aufsicht von oben (Fig.2b), wobei der besagte Steller ein Rotations-Getriebeelement eines vom Aktuator angetriebenen Rotationsgetriebes ist, welches derart angeordnet ist, dass die Drehachse des besagten Rotations-Getriebeelements mit der Lenk- oder Spreizachse des Rades zusammenfällt.

In den Beispielen ist das Hinter-Rad 3 eines zweispurigen Fahrzeugs drehbar an einem sog. Schwenklager 2, welches auch als ein um eine Lenk- oder Spreizachse 8 verschwenkbarer Radträger bezeichnet werden kann, um seine Drehachse 4 drehbar gelagert. Dieses Schwenklager 2 ist gegenüber dem Fahrzeug-Aufbau durch einen Längslenker 1 sowie zwei Querlenker 11, 12, von denen in der Aufsicht (Fig. 1b, 2b, 3b, 4c) nur der obere Querlenker 11 sichtbar ist, und bei den Ausführungsbeispielen der Figuren 1a, 1b weiterhin durch eine Spurstange 9' geführt, welche als Steller 9 für das Schwenklager 2 fungiert. Eine solche Spurstange 9' oder ein vergleichbar wirkender allgemeiner Steller 9 ist erforderlich, weil das Schwenklager 2 gelenkig, nämlich über ein oberes Gelenk 6 und ein unteres Gelenk 7 mit dem Längslenker 1 verbunden ist, wobei diese beiden Gelenke 6, 7 eine bzw. die bereits genannte und annähernd vertikal verlaufende Lenkachse 8 oder Spreizachse 8 für das Schwenklager 2 beschreiben, um welche das Schwenklager 2 und somit auch das Rad 3 zumindest geringfügig verschwenkbar ist, wodurch mittels des Stellers 9 bzw. der Spurstange 9' ein gewünschter Spurwinkel für das Rad 3 einstellbar ist. Beim Beispiel der Figuren 2a, 2b ist der letztgenannte Freiheitsgrad des Rades 3 durch ein Rotations-Getriebeelement gebunden, worauf an späterer Stelle näher eingegangen wird.

Während der Längslenker 1, an welchem die beiden Querlenker 11, 12 mit ihrem radseitige Ende angelenkt sind, sowie diese beiden Querlenker 11, 12 mit ihren dem Rad 3 abgewandten Enden wie üblich elastisch am figürlich nicht dargestellten Fahrzeug-Aufbau angelenkt sind, ist die beim Ausführungsbeispielen der Figuren 1a, 1b über ein Kugelgelenk 9a am Schwenklager 2 angreifende Spurstange 9' mit ihrem dem Rad 3 abgewandten Ende über ein Kugelgelenk 9b mit einem Stellelement 5a eines Aktuators 5 verbunden, mit welchem Aktuator 5 ein gewünschter Spurwinkel des Rades 3 einstellbar ist. Dabei ist der Aktuator 5 ist als Elektromotor ausgebildet, dessen Rotor eine Rotationsbewegung um eine Rotationsachse A auszuführen vermag. Zur Darstellung einer Verschwenkbewegung des Rades 3 muss somit das Stellelement 5a des Aktuators 5 mit dessen bzw. diesem Rotor verbunden sein. Dabei kann es sich bei dem Stellelement 5a um ein direkt oder unter Zwischenschaltung eines geeigneten Getriebes mit dem Rotor des Elektromotors bzw. Aktuators 5 verbundenes Bauelement handeln, an dessen dem besagten Rotor abgewandtes Ende die Spurstange 9' angelenkt ist, welche mit einer Rotationsbewegung des Rotors in eine im wesentlichen translatorische Bewegung versetzt wird, welche dann am Schwenklager 2 wieder in eine Verschwenkbewegung desselben um dessen Spreizachse 8 umgesetzt wird.

Der Aktuator 5 ist solchermaßen angeordnet, dass dessen Rotationsachse A in Richtung der Fzg.-Hochachse (und somit in Fig. 1b senkrecht zur Zeichenebene) verläuft. Wie insbesondere ebenfalls aus Fig.1b hervorgeht ist das Stellelement 5a in Form einer bezüglich dieser Rotationsachse A exzentrischen Scheibe oder eines Hebels oder dgl. ausgebildet, welche(r) veranlasst durch den Rotor des als Elektromotor ausgebildeten Aktuators 5 um diese Rotationsachse A verdrehbar ist. Indem abseits der Rotationsachse A die Spurstange 9' über ein Kugelgelenk 9b am Stellelement 5a angelenkt ist, wird mit einer geringfügigen Verdrehbewegung dieses Stellelements 5a um +/- maximal bspw. 20° ausgehend von der dargestellten Neutrallage, in welcher eine Verbindungslinie zwischen dem Kugelgelenk 9b und der Achse A in Fzg.-Längsrichtung L (diese steht in Fig.1a senkrecht zur Zeichenebene) verläuft, die Spurstange 9' im wesentlichen translatorisch annähernd in Fzg.-Querrichtung Q verlagert.
Hinsichtlich des Bauraumbedarfs besonders vorteilhaft ist das in den Figuren 1a, 1b dargestellte Ausführungsbeispiel, weil hier der Aktuator 5 zumindest teilweise im Innenraum einer als Schraubenfeder ausgebildeten Tragfeder 10, über welche der Fahrzeug-Aufbau anteilig am Rad 3 abgestützt ist, angeordnet ist. Wie insbesondere aus Fig. 1a hervorgeht ragt derjenige Teil des Aktuators 5, der den eigentlichen Elektromotor darstellt hier von unten praktisch vollständig in die Schraubenfeder bzw. Tragfeder 10 hinein und ist dabei am Federteller 10a dieser Tragfeder 10 gehalten, welcher seinerseits geeignet am Längslenker 1 befestigt oder abgestützt ist. In der Figur 1a unterhalb des Federtellers 10a liegt das Stellelement 5a mit dem Kugelgelenk 9b der Spurstange 9', so dass eine gewünschte Verlagerung derselben kollisionsfrei möglich ist.

Beim Beispiel nach den Figuren 2a, 2b wirkt der Aktuator 5 über ein beispielsweise als Stirnradgetriebe ausgebildetes Rotationsgetriebe 14 auf das Schwenklager 2 ein, wobei unter dem Begriff "Rotationsgetriebe" jegliches Getriebe verstanden wird, mittels dessen über zumindest zwei jeweils um eine Rotationsachse verdrehbare Getriebeelemente eine Drehbewegung eines ersten Elements, vorliegend des Rotors des Aktuators 5, in eine Drehbewegung eines zweiten Elements, vorliegend des Schwenklagers 2, umgesetzt wird. Dabei ist der Aktuator 5 sowie ein Gehäuse des Rotationsgetriebes 14 direkt oder indirekt am Längslenker 1 befestigt und es ist dabei das Rotationsgetriebe 14 solchermaßen angeordnet, dass die Rotationsachse des Aktuators 5 die Drehachse des ersten Getriebeelements ist, während die Drehachse des zweiten Getriebeelements dieses Rotationsgetriebes 14 mit der Lenk- oder Spreizachse 8 des Schwenklagers zusammenfällt. Dieses letztgenannte Getriebeelement übernimmt die Funktion des Stellers 9 gemäß dem Oberbegriff des Patentanspruchs 1 und trägt demzufolge in Figur 2b die Bezugsziffer 9. Das mit diesem letztgenannten und funktional vom Aktuator 5 aus betrachtet zweiten Getriebeelement 9 des Rotationsgetriebes 14 zusammenwirkende und vom Aktuator 5 angetriebene erste Getriebeelement des Rotationsgetriebes 14 ist dann das Stellelement 5a des Aktuators 5 und trägt demzufolge in Figur 2b die Bezugsziffer 5a. Dieses Beispiel nach den Figuren 2a, 2b zeichnet sich dabei durch höchste Kompaktheit aus, insbesondere wenn - was hier zwar nicht gezeigt, aber ohne weiteres möglich ist, der Aktuator 5 analog dem Beispiel von Fig. 1a, 1b (und einem kennzeichnenden Merkmal des unabhängigen Patentanspruchs) der Aktuator zumindest teilweise im Innenraum der Tragfeder 10 angeordnet wäre.

## Patentansprüche

1. Einzelradaufhängung eines mittels eines Aktuators (5) zumindest geringfügig lenkbaren Hinterrads (13) eines zweispurigen Fahrzeugs, dessen das Rad (13) tragende Schwenklager (2) durch einen sich im wesentlichen in Fahrzeug-Längsrichtung erstreckenden Längslenker (1) sowie zwei sich überwiegend in Fahrzeug-Querrichtung erstreckende und bei Betrachtung in Fahrzeug-Längsrichtung in verschiedenen Ebenen liegende Querlenker (11, 12) geführt ist, deren dem Schwenklager (2) abgewandte Enden zumindest geringfügig gelenkig direkt oder indirekt mit dem Fahrzeug-Aufbau verbunden sind,
wobei das Schwenklager (2) über zwei in unterschiedlicher Höhe über der Fahrbahn liegende Lager oder Gelenke (6, 7) derart gelenkig mit dem Längslenker (1) verbunden ist, dass diese Lager oder Gelenke (6, 7) eine überwiegend senkrecht verlaufende Lenkachse oder Spreizachse (8) für das Rad (13) beschreiben, und wobei jeder Querlenker (11, 12) über ein Gummilager oder ein zumindest einen geringen Drehfreiheitsgrad aufweisendes Gelenk am Längslenker (1) befestigt ist, und weiterhin am Schwenklager (2) ein Steller (9) angreift, der mit einem Stellelement (5a) des genannten Aktuators (5) zusammenwirkend eine rotatorische Bewegung des Aktuators (5) in eine Verschwenkbewegung des Schwenklagers um die Lenk- oder Spreizachse (8) umsetzt,
**dadurch gekennzeichnet, dass** die Rotationsachse (A) für die rotatorische Bewegung des radindividuellen Aktuators (5) zumindest annähernd in Richtung der Fahrzeug-Hochachse verläuft und das Stellelement (5a) des Aktuators (5) um diese Rotationsachse (A) verdrehbar ist, und dass der Aktuator (5) zumindest teilweise im Innenraum einer Tragfeder (10), über welche der Fahrzeug-Aufbau anteilig am Rad (13) abgestützt ist, angeordnet ist.

2. Einzelradaufhängung nach Anspruch 1, wobei der besagte Steller (9) eine zwischen dem Schwenklager (2) und dem Stellelement (5a) des Aktuators (5) vorgesehene und durch eine rotatorische Bewegung des Aktuators (5) annähernd translatorisch verlagerte Spurstange (9')ist.

3. Einzelradaufhängung nach Anspruch 1, wobei der besagte Steller (9) ein Rotations-Getriebeelement eines vom Aktuator (5) angetriebenen Rotationsgetriebes (14) ist, welches derart angeordnet ist, dass die Drehachse des genannten Rotations-Getriebeelements mit der Lenk- oder Spreizachse (8) des Rades (13) zusammenfällt.

## Claims

1. An individual wheel suspension of a rear wheel (13), which can be steered, at least slightly, by means of an actuator (5), of a two-track vehicle, of which the swivel bearing (2) supporting the wheel (13) is guided by a trailing arm (1) extending substantially in the longitudinal direction of the vehicle and by two control arms (11, 12) extending primarily in the transverse direction of the vehicle and arranged in different planes as considered in the longitudinal direction of the vehicle, the ends of the control arms remote from the swivel bearing (2) being connected to the vehicle body directly or indirectly, at least slightly in an articulated manner,
wherein the pivot bearing (2) is connected to the trailing arm (1) in an articulated manner via two bearings or joints (6, 7) arranged at different heights above the roadway, in such a way that these bearings or joints (6, 7) describe a steering axis or king pin axis (8), extending primarily perpendicularly, for the wheel (13), and wherein each control arm (11, 12) is secured to the trailing arm (1) via a rubber bearing or a joint having at least a small degree of rotational freedom, and furthermore an adjuster (9) acts on the swivel bearing (2), which adjuster interacts with an adjustment element (5a) of the aforesaid actuator (5) in order to convert a rotary movement of the actuator (5) into a pivot movement of the swivel bearing about the steering or king pin axis (8),
**characterised in that** the rotation axis (A) for the rotary movement of the actuator (5) individual to the wheel extends at least approximately in the direction of the vehicle vertical axis, and the adjustment element (5a) of the actuator (5) is rotatable about this rotation axis (A), and **in that** the actuator (5) is arranged at least in part in the interior of a suspension spring (10), via which the vehicle, body is supported proportionately on the wheel (13).

2. An individual wheel suspension according to claim 1, wherein said adjuster (9) is a tie rod (9') provided between the swivel bearing (2) and the adjustment element (5a) of the actuator (5) and displaced approximately in translation by a rotary movement of the actuator (5).

3. An individual wheel suspension according to claim 1, wherein said adjuster (9) is a rotary transmission element of a rotary transmission (14) driven by the actuator (5), which rotary transmission is arranged in such a way that the rotation axis of the aforesaid rotary transmission element coincides with the steering or king pin axis (8) of the wheel (13).

## Revendications

1. Suspension de roue individuelle d'une roue arrière (13) d'un véhicule à deux voies pouvant être braquée au moins faiblement au moyen d'un actionneur (5), dont le palier pivotant (2) portant la roue (13) est guidé par un bras oscillant longitudinal (1) s'étendant essentiellement dans la direction longitudinale du véhicule et par deux bras oscillants transversaux (11, 12) s'étendant de façon prépondérante dans la direction transversale du véhicule, situés dans différents plans en considérant la direction longitudinale du véhicule, et dont les extrémités situées à l'opposé du palier pivotant (2) sont reliées en étant au moins légèrement articulées directement ou indirectement à la carrosserie du véhicule,
le palier pivotant (2) étant articulé sur le bras longitudinal (1) par l'intermédiaire de deux paliers ou articulations (6, 7) situés à différentes hauteurs au-dessus de la chaussée, de sorte que ces paliers ou articulations (6, 7) décrivent un axe de braquage ou un axe d'écartement (8) pour la roue (13) s'étendant essentiellement verticalement, chaque bras oscillant transversal (11, 12) étant fixé sur le bras oscillant longitudinal (1) par l'intermédiaire d'un palier en caoutchouc ou d'une articulation présentant au moins une faible liberté de rotation, et en outre, sur le palier pivotant (2) venant en prise un organe de réglage (9) qui, en coopérant avec un élément de réglage (5a) de l'actionneur (5) transforme un mouvement de rotation de l'actionneur (5) en un mouvement de pivotement du palier pivotant autour de l'axe de braquage ou d'écartement (8),
**caractérisée en ce que**
l'axe de rotation (A) du mouvement de rotation de l'actionneur de roue individuel (5) s'étend au moins approximativement en direction de l'axe vertical du véhicule, l'élément de réglage (5a) de l'actionneur (5) est mobile en rotation autour de cet axe de rotation (A), et l'actionneur (5) est monté au moins partiellement dans le volume interne d'un ressort support (10) par l'intermédiaire duquel la carrosserie du véhicule s'appuie proportionnellement sur la roue (13).

2. Suspension de roue individuelle conforme à la revendication 1, dans laquelle l'organe de réglage (5) est une barre d'accouplement (9) montée entre le palier pivotant (2) et l'élément de réglage (5a) de l'actionneur (5) et déplacée essentiellement en translation par un mouvement de rotation de l'actionneur (5).

3. Suspension de roue individuelle conforme à la revendication 1, dans laquelle l'organe de réglage (9) est un élément de transmission rotatif d'une transmission rotative (14) entraînée par l'actionneur (5) qui est montée de sorte que l'axe de rotation de l'élément de transmission rotatif coïncide avec l'axe de braquage ou d'écartement (8) de la roue (13).
